# EUROPÄISCHE PATENTSCHRIFT

(11) **EP 0 861 758 B1**
(45) Veröffentlichungstag und Bekanntmachung des Hinweises auf die Patenterteilung: **11.08.2004**
(21) Anmeldenummer: 98101713.0
(22) Anmeldetag: 02.02.1998
(51) Int. Cl.: B60R 21/06

(54) **Laderaum-Trennvorrichtung für Kraftwagen, insbesondere für Kombinations-Personenkraftwagen**
Luggage compartment partitioning device for motor cars, in particular for estate cars
Dispositif de séparation de compartiment à bagages pour voitures automobiles, en particulier pour breaks

(30) Priorität: 28.02.1997 DE 19708192
(43) Veröffentlichungstag der Anmeldung: 02.09.1998
(73) Patentinhaber: BOS GmbH & Co. KG, 73760 Ostfildern (DE)
(72) Erfinder: Crisp, Sam T., 3140 Keerbergen (BE)
(74) Vertreter: Patentanwälte Ostriga, Sonnet, Wirths & Roche

(56) Entgegenhaltungen:
- DE-A- 2 749 560
- DE-U- 29 704 725
- FR-A- 2 251 167
- FR-A- 2 467 115
- US-A- 3 632 057

## Beschreibung

### Beschreibung für folgende Vertragsstaaten : DE, FR, GB, SE

Die Erfindung betrifft eine Laderaum-Trennvorrichtung für Kraftwagen, insbesondere für Kombinations-Personenkraftwagen.

Eine solche Laderaum-Trennvorrichtung ist in der DE 27 49 560 A1 beschrieben. Bei der bekannten Laderaum-Trennvorrichtung ist die Wickelwelle mit einem Federmotor versehen, dessen Drehmoment der Abrollbewegung der Werkstoffbahn entgegenwirkt. Bei der Werkstoffbahn kann es sich um eine Folie, ein Netz oder um ein anderes textiles flexibles bzw. biegeschlaffes Flächengebilde handeln.

Die Wickelwelle kann, mit oder ohne Rollogehäuse versehen, grundsätzlich an beliebigen Stellen des fahrzeugseitigen Einbaufeldes montiert werden. Überwiegend üblich ist eine sich nahezu über die gesamte Laderaumbreite erstreckende Wickelwelle, die hinter den Fondsitzen eines Kombinations-Personenkraftwagens, insbesondere an der Rückfläche der Fondsitzlehnen, gehalten ist.

Um die Werkstoffbahn der bekannten Laderaum-Trennvorrichtung in ihre Betriebsstellung zu versetzen, kann diese entweder oberhalb der Wickelwelle oben im Fahrzeug oder benachbart bzw. an der klappenartigen Hecktür lösbar befestigt sein. Zur Befestigung ist der freie Endbereich der Werkstoffbahn zumeist mit einer Zugstange versehen, deren beidendseitig angeordnete Befestigungsköpfe in korrelierende fahrzeugseitige Einhängeösen eingeschoben werden können.

Zur Sicherung der sich in ihrer Betriebsstellung befindlichen aufgespannten bzw. abgerollten Werkstoffbahn ist die Wickelwelle entweder an einem Ende oder an beiden Enden mit je einer Rastscheibe drehfest verbunden, die mit einer in der Halterung der Wickelwelle gelagerten Sperrklinke kooperiert. Letztere wird von einer Rückstellkraft, z.B. mittels einer Feder, in ihrer Sperrstellung gehalten und blockiert dabei die Wickelwelle gegen ein ungewolltes Abrollen der Werkstoffbahn. Dieses ist bei einem plötzlichen Aufprall des Ladeguts auf die Werkstoffbahn, z.B. bei einer unvorhergesehenen Vollbremsung, äußerst wichtig.

Damit die Werkstoffbahn der bekannten Laderaum-Trennvorrichtung in ihre Betriebsstellung ausgezogen werden kann, muß die Sperrklinke mittels eines Betätigungsgliedes in ihre Lösestellung versetzt werden. Dieses kann entweder in umständlicher Weise dadurch geschehen, daß das Betätigungsglied dauernd von Hand entgegen einer die Sperrklinke belastenden Rückstellkraft in der Lösestellung gehalten wird. Dies erfordert jedenfalls bei beidendseitig der Wickelwelle vorgesehenen Sperreinrichtungen die Hilfe einer zweiten Person. Andererseits ist gemäß der DE 27 49 560 A1 die alternative Möglichkeit vorhanden, das Betätigungsglied in seiner Lösestellung zu verrasten. Letzteres hat jedoch den erheblichen Nachteil, daß der Benutzer nach Aufspannen der Werkstoffbahn vergessen kann, die Sperrklinke oder beide Sperrklinken wieder in ihre Sperrstellung zu versetzen, so daß die Werkstoffbahn bei einem Aufprall des Ladegutes nicht oder nicht ausreichend gesichert wäre.

Bei der bekannten Laderaum-Trennvorrichtung gemäß der DE 27 49 560 A1 besteht die Sperrklinke aus einem einseitig endseitig eingespannten Federstahl-Formstanzteil, welches praktisch nur unmittelbar von Hand zu bedienen ist. Zudem bietet die lediglich aus Federstahlblech gefertigte Sperrklinke ein zu geringes Sperrwiderlager für den Fall größerer crashbedingter Belastungen.

Aus der EP 0838 375 A1 (Artikel 54(3) EPC Dokument) ist eine Sicherheitsnetzanordnung für Kraftfahrzeuge bekannt, mit einer entgegen dem Drehmoment eines Motors von einer Wickelwelle, die fahrzeugseitig in einer Halterung aufgenommen ist, abrollbaren, mit ihrem abgerollten freien Endbereich fahrzeugseitig lösbar festzulegenden Werkstoffbahn, wobei mit der Wickelwelle eine Rastscheibe drehfest ist, mit der eine in der Halterung gelagerte Sperrklinke kooperiert, welche von einer Rückstellkraft in ihrer Sperrstellung gehalten ist, und dabei die Wickelwelle gegen ein Abrollen der Werkstoffbahn blockiert, und welche mittels eines Betätigungsgliedes in ihre Lösestellung versetzbar ist. In ihrer Lösestellung wird die Sperrklinke mittels einer Steuerkugel gehalten. Erst wenn das Fahrzeug ausreichend stark angefahren oder gebremst wird, vollführt die Steuerkugel eine Bewegung in Folge ihrer Trägheit, so daß die Sperrklinke in ihre Sperrstellung gelangen kann.

Aus der FR-A 2467 115 ist eine nicht gattungsgemäße Sektioniereinrichtung bei einem Laderaum bekannt. Hier ist als Betätigungsglied eine mit der Sperrklinke einstückig verbundene Verlängerung zur Betätigung vorgesehen. Das Betätigungsglied bildet somit keine separate Einheit.

Ausgehend von der Laderaum-Trennvorrichtung gemäß der DE 27 49 560 A1, liegt der Erfindung die Aufgabe zugrunde, die eine Sperrvorrichtung aufweisende bekannte Laderaum-Trennvorrichtung derart weiterzuentwikkeln, daß diese eine bei einer widerstandsfähigen Bauform zugleich eine mehr universelle und leichte Handhabung sicherstellt.

Entsprechend der Erfindung wird diese Aufgabe zunächst dadurch gelöst, daß die Sperrklinke ein starres Bauteil darstellt, welches mit einer Lageraufnahme auf einem mit der Halterung raumfesten Schwenkachselement schwenkgelagert ist, daß die Rückstellkraft von einer die Sperrklinke beaufschlagenden besonderen Rückstelleinheit gebildet ist, daß das Betätigungsglied eine mit der Sperrklinke bewegungsgekuppelte separate Einheit bildet, und daß auf die in ihrer Lösestellung befindliche, in Richtung ihrer Sperrstellung der Rückstelleinheit belastete Sperrklinke oder auf das Betätigungsglied ein die Rückstellbewegung der Sperrklinke die Sperrstellung hinein beeinflussender Bewegungsverzögerer einwirkt.

Entsprechend der Erfindung bildet die Sperrklinke zunächst ein starres Bauteil, welches über eine eigene Lageraufnahme und über ein gesondertes raumfestes Schwenkachselement verfügt. Durch diese Maßnahme ist zunächst die grundsätzliche Voraussetzung dafür geschaffen worden, daß die entsprechend der Erfindung vorgesehene starre Sperrklinke im Unterschied zur bekannten Federstahlblech-Klinke gemäß der DE 27 49 560 A1 so stark ausgebildet werden kann, wie es etwaige crashbedingte Belastungsfälle erfordern. Außerdem wird erfindungsgemäß im Unterschied zum Gegenstand der DE 27 49 560 A1, bei welcher die aus Federstahlblech bestehende Sperrklinke selbst die Rückstellkraft bildet, nunmehr die Rückstellkraft einer gesonderten Rückstelleinheit zugeordnet. Auf diese Weise ist es entsprechend der erfindungsgemäß vorgenommenen Funktionstrennung möglich geworden, die Höhe der Rückstellkraft, beispielsweise einer Federrückstellkraft, unabhängig von der für die Sperrklinke zugrundezulegenden Bemessung zu wählen.

Schließlich bildet entsprechend der Erfindung das Betätigungsglied eine mit der Sperrklinke bewegungsgekuppelte separate Einheit. Dadurch, daß erfindungsgemäß das Betätigungsglied eine separate Einheit bildet, ist die Grundvoraussetzung dafür geschaffen worden, die Betätigungsstelle für die Sperrklinke an den für eine Bedienung günstigsten Ort, insbesondere von der Sperrklinke distanziert, vorzusehen. Im Unterschied zur Erfindung ist bei der ein Federstahlblechbauteil darstellenden Sperrklinke gemäß der DE 27 49 560 A1 das Betätigungsglied stoffschlüssig integriert.

Eine leichte bequeme Handhabung ohne Bedienungsfehler ist entsprechend der Erfindung dadurch ermöglicht worden, daß auf die in ihrer Lösestellung befindliche, in Richtung ihrer Sperrstellung von der Rückstelleinheit belastete Sperrklinke oder auf das Betätigungsglied ein die Rückstellbewegung der Sperrklinke in die Sperrstellung hinein beeinflussender Bewegungsverzögerer einwirkt.

Bei dieser vorteilhaften Ausführungsform geht die Bedienung der erfindungsgemäßen Laderaum-Trennvorrichtung folgendermaßen vor sich:

Die Sperrklinke wird aus ihrer Sperrstellung in ihre Lösestellung versetzt, was nur durch Überwindung der Rückstellkraft, z.B. einer Federrückstellkraft, geschehen kann. Wenn die Sperrstellung der Sperrklinke erreicht ist, kann das Betätigungsglied freigegeben werden, ohne daß die Sperrklinke wieder schlagartig - wie beim Gegenstand der DE 27 49 560 A1 - in ihre Sperrstellung zurückfällt. Vielmehr sieht die Erfindung einen die Rückstellbewegung der Sperrklinke in die Sperrstellung hinein verzögernden Bewegungsverzögerer vor. Dies kann z. B. in der Weise geschehen, daß beim Lösen der Sperrklinke der Kolben eines Stoßdämpfers bewegt wird, welcher die Zustellbewegung der Sperrklinke über eine solch lange Zeit bremst, die genügt, die Zugstange der Werkstoffbahn an den fahrzeugseitigen Befestigungspunkten anzubringen.

Andererseits ist es erfindungsgemäß auch möglich, die Sperrklinke in ihrer Lösestellung mittels eines lösbaren Rastzapfens zu verrasten, welcher erst nach einer vorbestimmten Zeit löst und dabei die Sperrklinke in ihre Sperrstellung entläßt. Das Lösen eines solchen Rastzapfens kann dabei auch elektrisch, z.B. elektromagnetisch, bei Verwendung an sich bekannter elektrischer Kurzzeitschalter erfolgen. Solche Kurzzeitschalter (Verzögerungsschalter) gelangen dem Prinzip nach beispielsweise bei der elektrischen Innenraumbeleuchtung von Kraftwagen zum Einsatz.

Entsprechend der Erfindung wird diese Aufgabe außerdem dadurch gelöst, daß daß die Sperrklinke ein starres Bauteil darstellt, welches mit einer Lageraufnahme auf einem mit der Halterung raumfesten Schwenkachselement schwenkgelagert ist, daß die Rückstellkraft von einer die Sperrklinke beaufschlagenden besonderen Rückstelleinheit gebildet ist, daß das Betätigungsglied eine mit der Sperrklinke bewegungsgekuppelte separate Einheit bildet, daß die Sperrklinke mittels eines gesonderten Bedienungsteils betätigbar ist und daß das Bedienungsteil ein zusätzliche Aufgaben erfüllendes Funktionselement ist.

Erfindungsgemäß ist die Sperrklinke mittels eines gesonderten Bedienungsteils betätigbar. Dieses gesonderte Bedienungsteil, welches eine zusätzliche Flexibilität hinsichtlich der Handhabung der Sperrklinke gestattet, kann mechanisch, elektromechanisch, elektromagnetisch, elektropneumatisch oder elektrohydraulisch ausgebildet sein.

Zudem sieht die Erfindung entsprechend einer vorteilhaften Ausführungsvariante vor, daß das Bedienungsteil ein zusätzliche Aufgaben erfüllendes Funktionselement ist. Wenn demnach ohnehin bereits ein Funktionselement in Form eines beweglichen Kfz-Ausstattungsteils vorhanden ist, dessen Bewegungsablauf mit der Betätigung der Laderaum-Trennvorrichtung kombiniert werden kann, so kann dieses Funktionselement zugleich das gesonderte Bedienungsteil für das Betätigungsglied der Sperrklinke darstellen.

Bei einer Ausführungsform sieht die Erfindung vor, daß das Bedienungsteil an einem die Wickelwelle umgebenden Rollogehäuse angeordnet ist, während entsprechend einer anderen erfindungsgemäßen Variante das Bedienungsteil von einem die Wickelwelle umgebenden Rollogehäuse distanziert angeordnet ist.

In weiterer Ausgestaltung der Erfindung untergreift das Betätigungsglied die Sperrklinke mit einem nur eine druckfeste Bewegungskupplung gestattenden Druckanschlag in Löserichtung. Auf diese Art ist gewährleistet, daß das Betätigungsglied, von der Rückstellbewegung der Sperrklinke abgekuppelt, beispielsweise die zeitgesteuerte oder verlangsamte Zustellbewegung der Sperrklinke nicht beeinträchtigen kann. Zweckmäßig ist es in einem solchen Fall, daß das Betätigungsglied ebenfalls nur entgegen der Wirkung einer Rückstellkraft, z.B. einer Rückstellfeder, im Lösesinne der Sperrklinke bewegt werden kann.

In weiterer Ausgestaltung der Erfindung hat es sich als zweckmäßig erwiesen, daß der Druckanschlag Bestandteil einer Kurvenscheibe ist.

Eine solche Kurvenscheibe ist besonders vorteilhaft mit einer torartigen Klappe eines die Wickelwelle umgebenden Rollogehäuses bewegungseinheitlich.

Eine solche Klappe, also ein zusätzliche Aufgaben erfüllendes Funktionselement, kann dazu dienen, bei aufgewickelter Werkstoffbahn die im Inneren des Rollogehäuses befindliche Zugstange freizulegen, um die Werkstoffbahn abrollen zu können. Unterdessen fährt die Klappe unter der Wirkung der Rückstellkraft selbsttätig in ihre Geschlossenstellung zurück, wobei die verzögerte Zustellbewegung der Sperrklinke von der vorlaufenden Rückstellbewegung der Klappe entkuppelt ist.

Eine andere vorteilhafte Erfindungsvariante besteht darin, daß bei einer an einer klappbaren Sitzlehne (ebenfalls ein zusätzliche Aufgaben erfüllendes Funktionselement) rückseitig befestigten Wickelwelle ein Betätigungselement der Sitzlehnensperre mit dem Betätigungselement für die Sperrklinke im gleichen Betätigungssinn bewegungsverbunden ist. Im gleichen Betätigungssinn bedeutet, daß sowohl das Betätigungselement der Sitzlehnensperre, z.B. ein Sperrhebel, als auch das Betätigungsglied der Sperrklinke zugleich in Sperroder Löserichtung bewegt werden.

Hierbei sind folgende Varianten möglich:

Der Sperrhebel der Sitzlehnensperre wird in seine Sperrstellung versetzt, um die Sitzlehne in ihrer eingefalteten Sitzlehnenposition zu halten. Zugleich wird der Sperrklinke z.B. die Möglichkeit gegeben, zeitgesteuert oder verlangsamt zur Lagesicherung der Werkstoffbahn in ihre Sperrstellung einzuschwenken.

Für den Fall, daß die Sitzlehne nur kurze Zeit vorübergehend unter Abrollen der Werkstoffbahn nach vorn geschwenkt wird, befindet sich der Sperrhebel der Sitzlehnensperre weiterhin in seiner Lösestellung. Erst wenn die Sitzlehne wieder in ihre aufrechte Position zurückgeschwenkt und dabei der Sperrhebel der Sitzlehnensperre in seine Sperrstellung versetzt wird, wird der Sperrklinke wiederum, wie bereits analog vorbeschrieben, die Möglichkeit eröffnet, sich zeitgesteuert oder verlangsamt in ihre Sperrstellung zurückzubewegen.

In den Zeichnungen sind bevorzugte Ausführungsbeispiele entsprechend der Erfindung schematisch dargestellt. Hierbei zeigt:
Fig. 1 in räumlicher Teildarstellung eine Laderaum-Trennvorrichtung,
Fig. 2 die besondere Ausbildung einer Sperrvorrichtung und
Fig. 3 in räumlicher Teildarstellung eine rückseitig an einer Fondsitzlehne angebrachte Laderaum-Trennvorrichtung.

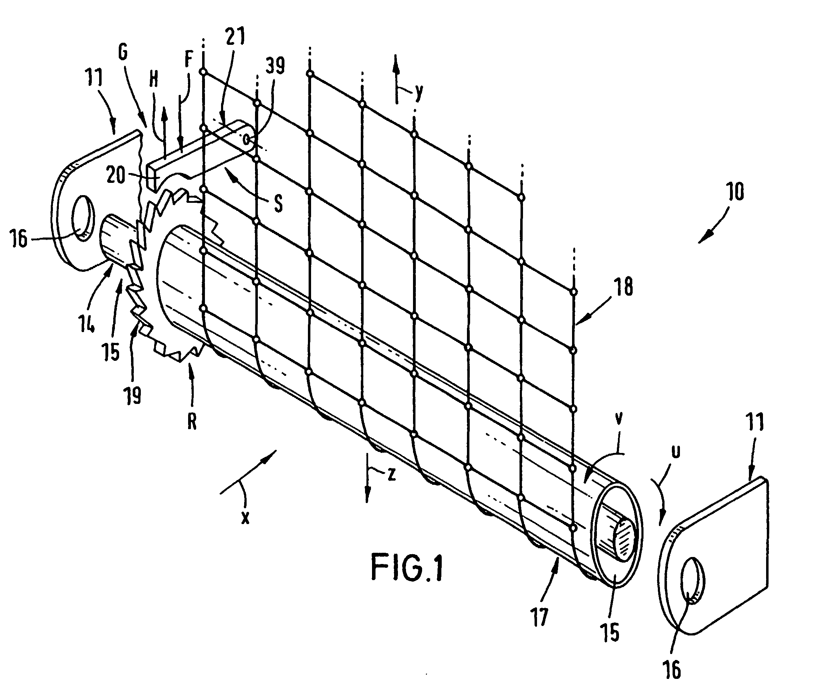

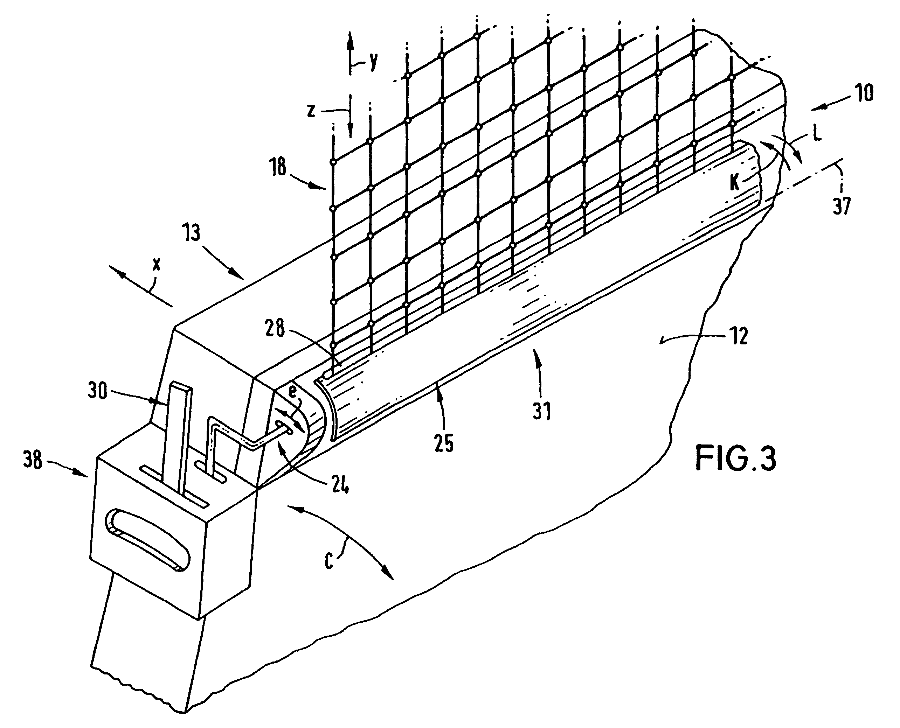

Eine Laderaum-Trennvorrichtung 10 besitzt zur Halterung ihres Rollogehäuses 31 an einer in Fig. 3 gezeigten rückwärtigen Fläche 12 einer Fondsitzlehne 13 zwei Haltelaschen 11. Diese weisen zur drehfesten Aufnahme von Einsteckenden 14 (in Fig. 1 ist nur ein Einsteckende 14 gezeigt) einer Halteachse 15 je ein Einsteckloch 16 auf.

In nicht dargestellter Weise ist auf der raumfesten Halteachse 15 eine rohrartige Wickelwelle 17 drehgelagert und von einem ebenfalls nicht dargestellten Federmotor im Aufwickeldrehsinn u einer aus einem Rückhaltenetz bestehenden Werkstoffbahn 18 rückstellbelastet.

An einem Ende oder an beiden Enden der Wickelwelle 17 ist oder sind mit dieser eine Rastscheibe R oder zwei Rastscheiben R drehfest verbunden, die jeweils mit asymmetrischen Zahnrasten 19 versehen sind.

In jede Zahnrast 19 kann ein Rastzahn 20 einer als Druckklinke ausgebildeten Sperrklinke S eingreifen, welche (analog zur Halterung 11, 11) mit ihrer Lagerung um die Schwenkachse 21 raumfest angeordnet ist. In Fig. 1 ist die Sperrklinke S in ihrer Lösestellung gezeigt, so daß die Werkstoffbahn 18 in Aufspann- bzw. Abrollrichtung y ausgezogen und in nicht dargestellter Weise mittels einer Spannstange an fahrzeugseitigen Einhängeösen lösbar festgelegt werden kann.

Wenn die Werkstoffbahn 18 sich in ihrer aufgespannten Betriebsstellung befindet, wird die Sperrklinke S in ihre Sperrstellung versetzt und greift dabei mit ihrem Rastzahn 20 in die gegenüberliegende Zahnrast 19 ein. Die als wesentliche Bauteile die Rastscheibe R und die Sperrklinke S aufweisende Sperrvorrichtung G stellt ein Formrichtgesperre dar. Dieses sperrt die Aufspannbewegung der Werkstoffbahn 18 in Aufspann- bzw. Abrollrichtung y. Andererseits gestattet das Gesperre G aber bei eingefallener Sperrklinke S das Aufrollen der Werkstoffbahn 18 in Aufrollrichtung z entsprechend der Drehrichtung v unter der Wirkung des Federmotors, weil der Rastzahn 20 über die längeren Zahnflanken der asymmetrischen Zahnrasten 19 hinweggleiten kann.

Die Sperrklinke S ist ständig durch eine Federrückstellkraft F belastet. Der Federrückstellkraft F wirkt beim Ausführungsbeispiel gemäß Fig. 1 eine Verzögerungskraft H eines Bewegungsverzögerers (s. Fig. 3 Pos. 22) entgegen, so daß die Sperrklinke S eine gewisse Zeit benötigt, um aus ihrer Lösestellung, in der ein Aufspannen der Werkstoffbahn 18 in Richtung y möglich ist, in ihre Sperrstellung zu gelangen, in welcher ein Aufspannen bzw. ein Abrollen der Werkstoffbahn 18 in Richtung y blockiert ist.

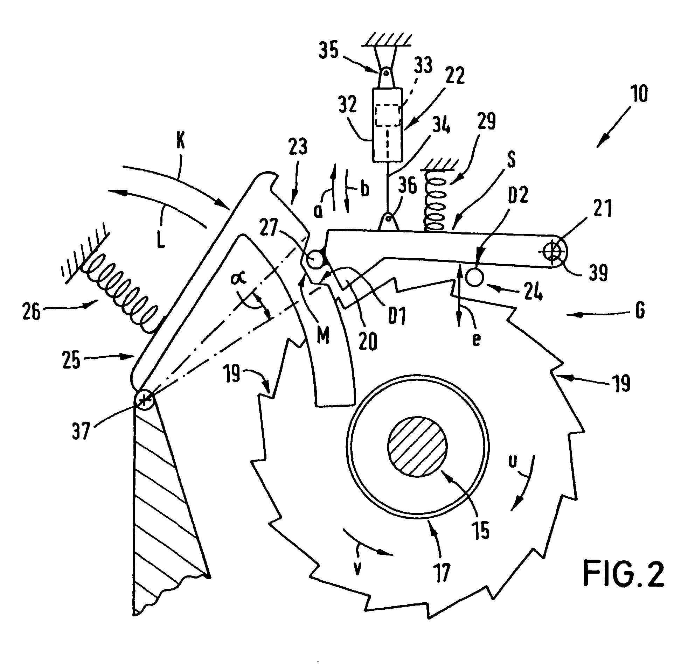

Die Darstellung gemäß Fig. 2 entspricht grundsätzlich der Darstellung gemäß Fig. 1. Der die Verzögerungskraft H bewirkende Bewegungsverzögerer trägt die Bezugsziffer 22.

Zur Betätigung der Sperrklinke S ist einerseits eine Kurvenscheibe 23 mit einem Druckanschlag D1 und andererseits ein entlang dem Doppelpfeil e bewegliches Betätigungsgestänge 24 mit einem Druckanschlag D2 vorgesehen.

Die Kurvenscheibe 23 ist Bestandteil einer torartigen Klappe 25, die auch in Fig. 3 dargestellt ist. Die torartige Klappe 25 des Rollogehäuses 31, hinter welcher die gesamte aufgerollte Werkstoffbahn 18 und ggf. auch die nicht dargestellte Zugstange verborgen werden können, ist in Zustellrichtung k durch eine Druckfeder 26 rückstellbelastet, wenn man die Klappe 25 in Öffnungsrichtung L um die Achse 37 herum aufschwenken will.

Die Funktion der Anordnung gemäß Fig. 2 ist folgende:

Es ist vorstellbar, daß die Klappe 25, und mithin die Kurvenscheibe 23 bereits in Öffnungsrichtung L bewegt wurden. Der Druckanschlag D1 der Kurvenscheibe 23 konnte also gegen den Vorsprung 27 der Sperrklinke S stoßen, um dabei die Sperrklinke S in Löserichtung a nach oben zu verschwenken. Nach Ergreifen der von der weggeschwenkten Klappe 25 freigelegten Werkstoffbahn 18 konnte die torartige Klappe 25 unter der Wirkung der Feder 26 in Zustellrichtung K in ihre Geschlossenstellung gemäß den Fig. 2 und 3 unter Belassung eines Ausziehschlitzes 28 zurückschwenken.

Während des Anhebens der Sperrklinke S in Richtung a wurde zugleich der Bewegungsverzögerer 22, z.B. ein Fluidstoßdämpfer, aktiviert. Der Fluidstoßdämpfer weist einen Zylinder 32, einen Kolben 33 und eine Kolbenstange 34 auf. Der Zylinder 32 ist bei 35 an einem raumfesten Widerlager angelenkt. Das freie Ende der Kolbenstange 34 ist bei 36 an der Sperrklinke S angelenkt. Bei jeder Bewegung des Kolbens 33 wird bekanntermaßen Fluid durch Drosselöffnungen geleitet, woraus eine Bewegungsverzögerung des Kolbens 33 resultiert.

Der Bewegungsverzögerer 22 bewirkt also, daß die Schraubendruckfeder 29 mit ihrer Federückstellkraft F die Sperrklinke S nur zeitverzögert in Sperrichtung b in ihre Sperrstellung versetzen kann, in welcher sich der Rastzahn 20 in die benachbarte Zahnrast 19 hineinlegt. Die durch den Bewegungsverzögerer 22 bewirkte Zeitverzögerung genügt jedenfalls, die Werkstoffbahn 18 in Abrollrichtung y aufzuspannen und die Zugstange fahrzeugseitig einzuhängen.

Während gemäß Fig. 2 die Sperrklinke S sich in ihrer in Richtung a abgehobenen Lösestellung befindet, kann die Kurvenscheibe 23 frei an dem sperrklinkenseitigen Vorsprung 27 in Richtung K zurückschwenken (zugleich Geschlossenstellung der Klappe 25). Dies ist möglich, weil der maßgebliche Aussparungsbereich M der Kurvenscheibe 23 sich über einen hinreichend großen Umfangswinkel α erstreckt.

Wenn die Sperrklinke S eingerastet ist und, z.B. bei einer Vollbremsung, sich das nicht dargestellte Ladegut in Fahrtrichtung x nach vorn bewegt, wird die Werkstoffbahn 18 durch die Sperrklinke S oder durch die Sperrklinken S daran gehindert, sich in Abrollrichtung y entsprechend dem Abrolldrehsinn u der Wickelwelle 17 zu bewegen.

Unabhängig von der Klappe K kann die Sperrklinke S auch betätigt werden, wenn sich die Werkstoffbahn 18 in ihrer aufgespannten Betriebsstellung befindet. Dazu dient das Betätigungsgestänge 24, wenn dieses entsprechend dem Doppelpfeil e nach oben bewegt wird. Dabei untergreift der Druckanschlag D2 die Sperrklinke S und hebt den Rastzahn 20 aus der ihm zugeordneten Zahnrast 19 heraus. Hierbei wird die Bewegung des sperrklinkenseitigen Vorsprunges 27 nicht behindert, weil sich der maßgebliche Kurvenbereich M der Kurvenscheibe 23 (geschlossene Klappe 25) über den vorerwähnten genügend großen Umfangswinkel α erstreckt.

Die Bewegung des Betätigungsgestänges 24 entlang dem Doppelpfeil e erfolgt dadurch, daß dieses bewegungseinheitlich mit dem Sperrhebel 30 einer Sperrvorrichtung 38 im gleichen Betätigungssinn bewegungsverbunden ist.

Falls demnach der Sperrhebel 30 gemäß Fig. 3 nach rechts bewegt wird und die entlang dem Doppelpfeil c schwenkbewegliche Fondsitzlehne 13 z.B. nach vorn geschwenkt wird, befindet sich die Sperrklinke S in ihrer Lösestellung gemäß Fig. 2. Folglich kann die Werkstoffbahn 18 während der Schwenkbewegung der Fondsitzlehne 13 in Fahrtrichtung x nach vorn zusätzlich abgerollt werden kann.

Wenn die Fondsitzlehne 13 in ihrer in Richtung x vorgeschwenkten Position mittels des Sperrhebels 30 fahrzeugseitig arretiert und dabei der Sperrhebel 30 in seine Sperrstellung zurückversetzt wird, bewegt sich das Betätigungsgestänge 24 gemäß Fig. 2 nach unten. Folglich ist die Bewegungsbahn der Sperrklinke S frei und diese kann sich in Sperrichtung b nach unten in ihre Sperrstellung begeben. Auf diese Weise ist auch in der vorgeschwenkten eingefalteten Position der Fondsitzlehne 13 die Werkstoffbahn 18 gegen ein unerwünschtes Abrollen in Richtung y blockiert.

Ein Zurückschwenken aus der beschriebenen Sperrlage der Fondsitzlehne 13 zurück in die Position gemäß Fig. 3 erfordert zunächst wieder eine Bewegung des Sperrhebels 30 entgegen der Fahrtrichtung x. Dabei befindet sich die Sperrklinke S in ihrer Lösestellung, und die Werkstoffbahn 18 wird in Richtung z entsprechend dem Drehsinn v der Wickelwelle 17 aufgewickelt. Sobald der Sperrhebel 30 wieder in Fahrtrichtung x in seine Sperrstellung versetzt wird, um die Fondsitzlehne 13 zu fixieren, kann sich die durch die Feder 29 rückstellbelastete Sperrklinke S unter der Wirkung des Bewegungsverzögerers 22 zeitverzögert in Richtung b in ihre Sperrposition zurückbewegen.

### Beschreibung für folgende Vertragsstaaten: IT, ES

Erfindung betrifft eine Laderaum-Trennvorrichtung für Kraftwagen, insbesondere für Kombinations-Personenkraftwagen, entsprechend dem Oberbegriff des Anspruchs 1.

Eine solche Laderaum-Trennvorrichtung ist in der DE 27 49 560 A1 beschrieben, die den gattungsbildenden Oberbegriff des Anspruchs 1 darstellt. Bei der bekannten Laderaum-Trennvorrichtung ist die Wickelwelle mit einem Federmotor versehen, dessen Drehmoment der Abrollbewegung der Werkstoffbahn entgegenwirkt. Bei der Werkstoffbahn kann es sich um eine Folie, ein Netz oder um ein anderes textiles flexibles bzw. biegeschlaffes Flächengebilde handeln.

Die Wickelwelle kann, mit oder ohne Rollogehäuse versehen, grundsätzlich an beliebigen Stellen des fahrzeugseitigen Einbaufeldes montiert werden. Überwiegend üblich ist eine sich nahezu über die gesamte Laderaumbreite erstreckende Wickelwelle, die hinter den Fondsitzen eines Kombinations-Personenkraftwagens, insbesondere an der Rückfläche der Fondsitzlehnen, gehalten ist.

Um die Werkstoffbahn der bekannten Laderaum-Trennvorrichtung in ihre Betriebsstellung zu versetzen, kann diese entweder oberhalb der Wickelwelle oben im Fahrzeug oder benachbart bzw. an der klappenartigen Hecktür lösbar befestigt sein. Zur Befestigung ist der freie Endbereich der Werkstoffbahn zumeist mit einer Zugstange versehen, deren beidendseitig angeordnete Befestigungsköpfe in korrelierende fahrzeugseitige Einhängeösen eingeschoben werden können.

Zur Sicherung der sich in ihrer Betriebsstellung befindlichen aufgespannten bzw. abgerollten Werkstoffbahn ist die Wickelwelle entweder an einem Ende oder an beiden Enden mit je einer Rastscheibe drehfest verbunden, die mit einer in der Halterung der Wickelwelle gelagerten Sperrklinke kooperiert. Letztere wird von einer Rückstellkraft, z.B. mittels einer Feder, in ihrer Sperrstellung gehalten und blockiert dabei die Wickelwelle gegen ein ungewolltes Abrollen der Werkstoffbahn. Dieses ist bei einem plötzlichen Aufprall des Ladeguts auf die Werkstoffbahn, z.B. bei einer unvorhergesehenen Vollbremsung, äußerst wichtig.

Damit die Werkstoffbahn der bekannten Laderaum-Trennvorrichtung in ihre Betriebsstellung ausgezogen werden kann, muß die Sperrklinke mittels eines Betätigungsgliedes in ihre Lösestellung versetzt werden. Dieses kann entweder in umständlicher Weise dadurch geschehen, daß das Betätigungsglied dauernd von Hand entgegen einer die Sperrklinke belastenden Rückstellkraft in der Lösestellung gehalten wird. Dies erfordert jedenfalls bei beidendseitig der Wickelwelle vorgesehenen Sperreinrichtungen die Hilfe einer zweiten Person. Andererseits ist gemäß der DE 27 49 560 A1 die alternative Möglichkeit vorhanden, das Betätigungsglied in seiner Lösestellung zu verrasten. Letzteres hat jedoch den erheblichen Nachteil, daß der Benutzer nach Aufspannen der Werkstoffbahn vergessen kann, die Sperrklinke oder beide Sperrklinken wieder in ihre Sperrstellung zu versetzen, so daß die Werkstoffbahn bei einem Aufprall des Ladegutes nicht oder nicht ausreichend gesichert wäre.

Bei der bekannten Laderaum-Trennvorrichtung gemäß der DE 27 49 560 A1 besteht die Sperrklinke aus einem einseitig endseitig eingespannten Federstahl-Formstanzteil, welches praktisch nur unmittelbar von Hand zu bedienen ist. Zudem bietet die lediglich aus Federstahlblech gefertigte Sperrklinke ein zu geringes Sperrwiderlager für den Fall größerer crashbedingter Belastungen.

Aus der FR-A 2 467 115 ist eine nicht gattungsgemäße Sektioniereinrichtung bei einem Laderaum bekannt. Hier ist als Betätigungsglied eine mit der Sperrklinke einstückig verbundene Verlängerung zur Betätigung vorgesehen. Das Betätigungsglied bildet somit keine separate Einheit.

Ausgehend von der Laderaum-Trennvorrichtung gemäß der DE 27 49 560 A1, liegt der Erfindung die Aufgabe zugrunde, die eine Sperrvorrichtung aufweisende bekannte Laderaum-Trennvorrichtung derart weiterzuentwikkeln, daß diese eine bei einer widerstandsfähigen Bauform zugleich eine mehr universelle und leichte Handhabung sicherstellt.

Entsprechend der Erfindung wird diese Aufgabe dadurch gelöst, daß die Sperrklinke ein starres Bauteil darstellt, welches mit einer Lageraufnahme auf einem mit der Halterung raumfesten Schwenkachselement schwenkgelagert ist, daß die Rückstellkraft von einer die Sperrklinke beaufschlagenden besonderen Rückstelleinheit gebildet ist, und daß das Betätigungsglied eine mit der Sperrklinke bewegungsgekuppelte separate Einheit bildet, die mittels eines gesonderten Bedienteil betätigbar ist.

Entsprechend der Erfindung bildet die Sperrklinke zunächst ein starres Bauteil, welches über eine eigene Lageraufnahme und über ein gesondertes raumfestes Schwenkachselement verfügt. Durch diese Maßnahme ist zunächst die grundsätzliche Voraussetzung dafür geschaffen worden, daß die entsprechend der Erfindung vorgesehene starre Sperrklinke im Unterschied zur bekannten Federstahlblech-Klinke gemäß der DE 27 49 560 A1 so stark ausgebildet werden kann, wie es etwaige crashbedingte Belastungsfälle erfordern. Außerdem wird erfindungsgemäß im Unterschied zum Gegenstand der DE 27 49 560 A1, bei welcher die aus Federstahlblech bestehende Sperrklinke selbst die Rückstellkraft bildet, nunmehr die Rückstellkraft einer gesonderten Rückstelleinheit zugeordnet. Auf diese weise ist es entsprechend der erfindungsgemäß vorgenommenen Funktionstrennung möglich geworden, die Höhe der Rückstellkraft, beispielsweise einer Federrückstellkraft, unabhängig von der für die Sperrklinke zugrundezulegenden Bemessung zu wählen.

Schließlich bildet entsprechend der Erfindung das Betätigungsglied eine mit der Sperrklinke bewegungsgekuppelte separate Einheit. Dadurch, daß erfindungsgemäß das Betätigungsglied eine separate Einheit bildet, ist die Grundvoraussetzung dafür geschaffen worden, die Betätigungsstelle für die Sperrklinke an den für eine Bedienung günstigsten Ort, insbesondere von der Sperrklinke distanziert, vorzusehen. Im Unterschied zur Erfindung ist bei der ein Federstahlblechbauteil darstellenden Sperrklinke gemäß der DE 27 49 560 A1 das Betätigungsglied stoffschlüssig integriert.

In weiterer Ausgestaltung der Erfindung ist die Sperrklinke mittels eines gesonderten Bedienungsteils betätigbar. Dieses gesonderte Bedienungsteil, welches eine zusätzliche Flexibilität hinsichtlich der Handhabung der Sperrklinke gestattet, kann mechanisch, elektromechanisch, elektromagnetisch, elektropneumatisch oder elektrohydraulisch ausgebildet sein.

Zudem sieht die Erfindung entsprechend einer vorteilhaften Ausführungsvariante vor, daß das Bedienungsteil ein zusätzliche Aufgaben erfüllendes Funktionselement ist. Wenn demnach ohnehin bereits ein Funktionselement in Form eines beweglichen Kfz-Ausstattungsteils vorhanden ist, dessen Bewegungsablauf mit der Betätigung der Laderaum-Trennvorrichtung kombiniert werden kann, so kann dieses Funktionselement zugleich das gesonderte Bedienungsteil für das Betätigungsglied der Sperrklinke darstellen.

Bei einer Ausführungsform sieht die Erfindung vor, daß das Bedienungsteil an einem die Wickelwelle umgebenden Rollogehäuse angeordnet ist, während entsprechend einer anderen erfindungsgemäßen Variante das Bedienungsteil von einem die Wickelwelle umgebenden Rollogehäuse distanziert angeordnet ist.

Eine leichte bequeme Handhabung ohne Bedienungsfehler ist entsprechend der Erfindung dadurch ermöglicht worden, daß auf die in ihrer Lösestellung befindliche, in Richtung ihrer Sperrstellung von der Rückstelleinheit belastete Sperrklinke oder auf das Betätigungsglied ein die Rückstellbewegung der Sperrklinke in die Sperrstellung hinein beeinflussender Bewegungsverzögerer einwirkt.

Bei dieser vorteilhaften Ausführungsform geht die Bedienung der erfindungsgemäßen Laderaum-Trennvorrichtung folgendermaßen vor sich:

Die Sperrklinke wird aus ihrer Sperrstellung in ihre Lösestellung versetzt, was nur durch Überwindung der Rückstellkraft, z.B. einer Federrückstellkraft, geschehen kann. Wenn die Sperrstellung der Sperrklinke erreicht ist, kann das Betätigungsglied freigegeben werden, ohne daß die Sperrklinke wieder schlagartig - wie beim Gegenstand der DE 27 49 560 A1 - in ihre Sperrstellung zurückfällt. Vielmehr sieht die Erfindung einen die Rückstellbewegung der Sperrklinke in die Sperrstellung hinein verzögernden Bewegungsverzögerer vor. Dies kann z. B. in der Weise geschehen, daß beim Lösen der Sperrklinke der Kolben eines Stoßdämpfers bewegt wird, welcher die Zustellbewegung der Sperrklinke über eine solch lange Zeit bremst, die genügt, die Zugstange der Werkstoffbahn an den fahrzeugseitigen Befestigungspunkten anzubringen.

Andererseits ist es erfindungsgemäß auch möglich, die Sperrklinke in ihrer Lösestellung mittels eines lösbaren Rastzapfens zu verrasten, welcher erst nach einer vorbestimmten Zeit löst und dabei die Sperrklinke in ihre Sperrstellung entläßt. Das Lösen eines solchen Rastzapfens kann dabei auch elektrisch, z.B. elektromagnetisch, bei Verwendung an sich bekannter elektrischer Kurzzeitschalter erfolgen. Solche Kurzzeitschalter (Verzögerungsschalter) gelangen dem Prinzip nach beispielsweise bei der elektrischen Innenraumbeleuchtung von Kraftwagen zum Einsatz.

In weiterer Ausgestaltung der Erfindung untergreift das Betätigungsglied die Sperrklinke mit einem nur eine druckfeste Bewegungskupplung gestattenden Druckanschlag in Löserichtung. Auf diese Art ist gewährleistet, daß das Betätigungsglied, von der Rückstellbewegung der Sperrklinke abgekuppelt, beispielsweise die zeitgesteuerte oder verlangsamte Zustellbewegung der Sperrklinke nicht beeinträchtigen kann. Zweckmäßig ist es in einem solchen Fall, daß das Betätigungsglied ebenfalls nur entgegen der Wirkung einer Rückstellkraft, z.B. einer Rückstellfeder, im Lösesinne der Sperrklinke bewegt werden kann.

In weiterer Ausgestaltung der Erfindung hat es sich als zweckmäßig erwiesen, daß der Druckanschlag Bestandteil einer Kurvenscheibe ist.

Eine solche Kurvenscheibe ist besonders vorteilhaft mit einer torartigen Klappe eines die wickelwelle umgebenden Rollogehäuses bewegungseinheitlich.

Eine solche Klappe, also ein zusätzliche Aufgaben erfüllendes Funktionselement, kann dazu dienen, bei aufgewickelter Werkstoffbahn die im Inneren des Rollogehäuses befindliche Zugstange freizulegen, um die Werkstoffbahn abrollen zu können. Unterdessen fährt die Klappe unter der Wirkung der Rückstellkraft selbsttätig in ihre Geschlossenstellung zurück, wobei die verzögerte Zustellbewegung der Sperrklinke von der vorlaufenden Rückstellbewegung der Klappe entkuppelt ist.

Eine andere vorteilhafte Erfindungsvariante besteht darin, daß bei einer an einer klappbaren Sitzlehne (ebenfalls ein zusätzliche Aufgaben erfüllendes Funktionselement) rückseitig befestigten Wickelwelle ein Betätigungselement der Sitzlehnensperre mit dem Betätigungselement für die Sperrklinke im gleichen Betätigungssinn bewegungsverbunden ist. Im gleichen Betätigungssinn bedeutet, daß sowohl das Betätigungselement der Sitzlehnensperre, z.B. ein Sperrhebel, als auch das Betätigungsglied der Sperrklinke zugleich in Sperroder Löserichtung bewegt werden.

Hierbei sind folgende Varianten möglich:

Der Sperrhebel der Sitzlehnensperre wird in seine Sperrstellung versetzt, um die Sitzlehne in ihrer eingefalteten Sitzlehnenposition zu halten. Zugleich wird der Sperrklinke z.B. die Möglichkeit gegeben, zeitgesteuert oder verlangsamt zur Lagesicherung der Werkstoffbahn in ihre Sperrstellung einzuschwenken.

Für den Fall, daß die Sitzlehne nur kurze Zeit vorübergehend unter Abrollen der Werkstoffbahn nach vorn geschwenkt wird, befindet sich der Sperrhebel der Sitzlehnensperre weiterhin in seiner Lösestellung. Erst wenn die Sitzlehne wieder in ihre aufrechte Position zurückgeschwenkt und dabei der Sperrhebel der Sitzlehnensperre in seine Sperrstellung versetzt wird, wird der Sperrklinke wiederum, wie bereits analog vorbeschrieben, die Möglichkeit eröffnet, sich zeitgesteuert oder verlangsamt in ihre Sperrstellung zurückzubewegen.

In den Zeichnungen sind bevorzugte Ausführungsbeispiele entsprechend der Erfindung schematisch dargestellt. Hierbei zeigt:
Fig. 1 in räumlicher Teildarstellung eine Laderaum-Trennvorrichtung,
Fig. 2 die besondere Ausbildung einer Sperrvorrichtung und
Fig. 3 in räumlicher Teildarstellung eine rückseitig an einer Fondsitzlehne angebrachte Laderaum-Trennvorrichtung.

Eine Laderaum-Trennvorrichtung 10 besitzt zur Halterung ihres Rollogehäuses 31 an einer in Fig. 3 gezeigten rückwärtigen Fläche 12 einer Fondsitzlehne 13 zwei Haltelaschen 11. Diese weisen zur drehfesten Aufnahme von Einsteckenden 14 (in Fig. 1 ist nur ein Einsteckende 14 gezeigt) einer Halteachse 15 je ein Einsteckloch 16 auf.

In nicht dargestellter Weise ist auf der raumfesten Halteachse 15 eine rohrartige Wickelwelle 17 drehgelagert und von einem ebenfalls nicht dargestellten Federmotor im Aufwickeldrehsinn u einer aus einem Rückhaltenetz bestehenden Werkstoffbahn 18 rückstellbelastet.

An einem Ende oder an beiden Enden der Wickelwelle 17 ist oder sind mit dieser eine Rastscheibe R oder zwei Rastscheiben R drehfest verbunden, die jeweils mit asymmetrischen Zahnrasten 19 versehen sind.

In jede Zahnrast 19 kann ein Rastzahn 20 einer als Druckklinke ausgebildeten Sperrklinke S eingreifen, welche (analog zur Halterung 11, 11) mit ihrer Lagerung um die Schwenkachse 21 raumfest angeordnet ist. In Fig. 1 ist die Sperrklinke S in ihrer Lösestellung gezeigt, so daß die Werkstoffbahn 18 in Aufspann- bzw. Abrollrichtung y ausgezogen und in nicht dargestellter Weise mittels einer Spannstange an fahrzeugseitigen Einhängeösen lösbar festgelegt werden kann.

Wenn die Werkstoffbahn 18 sich in ihrer aufgespannten Betriebsstellung befindet, wird die Sperrklinke S in ihre Sperrstellung versetzt und greift dabei mit ihrem Rastzahn 20 in die gegenüberliegende Zahnrast 19 ein. Die als wesentliche Bauteile die Rastscheibe R und die Sperrklinke S aufweisende Sperrvorrichtung G stellt ein Formrichtgesperre dar. Dieses sperrt die Aufspannbewegung der Werkstoffbahn 18 in Aufspann- bzw. Abrollrichtung y. Andererseits gestattet das Gesperre G aber bei eingefallener Sperrklinke S das Aufrollen der Werkstoffbahn 18 in Aufrollrichtung z entsprechend der Drehrichtung v unter der Wirkung des Federmotors, weil der Rastzahn 20 über die längeren Zahnflanken der asymmetrischen Zahnrasten 19 hinweggleiten kann.

Die Sperrklinke S ist ständig durch eine Federrückstellkraft F belastet. Der Federrückstellkraft F wirkt beim Ausführungsbeispiel gemäß Fig. 1 eine Verzögerungskraft H eines Bewegungsverzögerers (s. Fig. 3 Pos. 22) entgegen, so daß die Sperrklinke S eine gewisse Zeit benötigt, um aus ihrer Lösestellung, in der ein Aufspannen der Werkstoffbahn 18 in Richtung y möglich ist, in ihre Sperrstellung zu gelangen, in welcher ein Aufspannen bzw. ein Abrollen der Werkstoffbahn 18 in Richtung y blockiert ist.

Die Darstellung gemäß Fig. 2 entspricht grundsätzlich der Darstellung gemäß Fig. 1. Der die Verzögerungskraft H bewirkende Bewegungsverzögerer trägt die Bezugsziffer 22.

Zur Betätigung der Sperrklinke S ist einerseits eine Kurvenscheibe 23 mit einem Druckanschlag D1 und andererseits ein entlang dem Doppelpfeil e bewegliches Betätigungsgestänge 24 mit einem Druckanschlag D2 vorgesehen.

Die Kurvenscheibe 23 ist Bestandteil einer torartigen Klappe 25, die auch in Fig. 3 dargestellt ist. Die torartige Klappe 25 des Rollogehäuses 31, hinter welcher die gesamte aufgerollte Werkstoffbahn 18 und ggf. auch die nicht dargestellte Zugstange verborgen werden können, ist in Zustellrichtung k durch eine Druckfeder 26 rückstellbelastet, wenn man die Klappe 25 in Öffnungsrichtung L um die Achse 37 herum aufschwenken will.

Die Funktion der Anordnung gemäß Fig. 2 ist folgende:

Es ist vorstellbar, daß die Klappe 25, und mithin die Kurvenscheibe 23 bereits in Öffnungsrichtung L bewegt wurden. Der Druckanschlag D1 der Kurvenscheibe 23 konnte also gegen den Vorsprung 27 der Sperrklinke S stoßen, um dabei die Sperrklinke S in Löserichtung a nach oben zu verschwenken. Nach Ergreifen der von der weggeschwenkten Klappe 25 freigelegten Werkstoffbahn 18 konnte die torartige Klappe 25 unter der Wirkung der Feder 26 in Zustellrichtung K in ihre Geschlossenstellung gemäß den Fig. 2 und 3 unter Belassung eines Ausziehschlitzes 28 zurückschwenken.

Während des Anhebens der Sperrklinke S in Richtung a wurde zugleich der Bewegungsverzögerer 22, z.B. ein Fluidstoßdämpfer, aktiviert. Der Fluidstoßdämpfer weist einen Zylinder 32, einen Kolben 33 und eine Kolbenstange 34 auf. Der Zylinder 32 ist bei 35 an einem raumfesten Widerlager angelenkt. Das freie Ende der Kolbenstange 34 ist bei 36 an der Sperrklinke S angelenkt. Bei jeder Bewegung des Kolbens 33 wird bekanntermaßen Fluid durch Drosselöffnungen geleitet, woraus eine Bewegungsverzögerung des Kolbens 33 resultiert.

Der Bewegungsverzögerer 22 bewirkt also, daß die Schraubendruckfeder 29 mit ihrer Federückstellkraft F die Sperrklinke S nur zeitverzögert in Sperrichtung b in ihre Sperrstellung versetzen kann, in welcher sich der Rastzahn 20 in die benachbarte Zahnrast 19 hineinlegt. Die durch den Bewegungsverzögerer 22 bewirkte Zeitverzögerung genügt jedenfalls, die Werkstoffbahn 18 in Abrollrichtung y aufzuspannen und die Zugstange fahrzeugseitig einzuhängen.

Während gemäß Fig. 2 die Sperrklinke S sich in ihrer in Richtung a abgehobenen Lösestellung befindet, kann die Kurvenscheibe 23 frei an dem sperrklinkenseitigen Vorsprung 27 in Richtung K zurückschwenken (zugleich Geschlossenstellung der Klappe 25). Dies ist möglich, weil der maßgebliche Aussparungsbereich M der Kurvenscheibe 23 sich über einen hinreichend großen Umfangswinkel α erstreckt.

Wenn die Sperrklinke S eingerastet ist und, z.B. bei einer Vollbremsung, sich das nicht dargestellte Ladegut in Fahrtrichtung x nach vorn bewegt, wird die Werkstoffbahn 18 durch die Sperrklinke S oder durch die Sperrklinken S daran gehindert, sich in Abrollrichtung y entsprechend dem Abrolldrehsinn u der Wickelwelle 17 zu bewegen.

Unabhängig von der Klappe K kann die Sperrklinke S auch betätigt werden, wenn sich die Werkstoffbahn 18 in ihrer aufgespannten Betriebsstellung befindet. Dazu dient das Betätigungsgestänge 24, wenn dieses entsprechend dem Doppelpfeil e nach oben bewegt wird. Dabei untergreift der Druckanschlag D2 die Sperrklinke S und hebt den Rastzahn 20 aus der ihm zugeordneten Zahnrast 19 heraus. Hierbei wird die Bewegung des sperrklinkenseitigen Vorsprunges 27 nicht behindert, weil sich der maßgebliche Kurvenbereich M der Kurvenscheibe 23 (geschlossene Klappe 25) über den vorerwähnten genügend großen Umfangswinkel α erstreckt.

Die Bewegung des Betätigungsgestänges 24 entlang dem Doppelpfeil e erfolgt dadurch, daß dieses bewegungseinheitlich mit dem Sperrhebel 30 einer Sperrvorrichtung 38 im gleichen Betätigungssinn bewegungsverbunden ist.

Falls demnach der Sperrhebel 30 gemäß Fig. 3 nach rechts bewegt wird und die entlang dem Doppelpfeil c schwenkbewegliche Fondsitzlehne 13 z.B. nach vorn geschwenkt wird, befindet sich die Sperrklinke S in ihrer Lösestellung gemäß Fig. 2. Folglich kann die Werkstoffbahn 18 während der Schwenkbewegung der Fondsitzlehne 13 in Fahrtrichtung x nach vorn zusätzlich abgerollt werden kann.

Wenn die Fondsitzlehne 13 in ihrer in Richtung x vorgeschwenkten Position mittels des Sperrhebels 30 fahrzeugseitig arretiert und dabei der Sperrhebel 30 in seine Sperrstellung zurückversetzt wird, bewegt sich das Betätigungsgestänge 24 gemäß Fig. 2 nach unten. Folglich ist die Bewegungsbahn der Sperrklinke S frei und diese kann sich in Sperrichtung b nach unten in ihre Sperrstellung begeben. Auf diese Weise ist auch in der vorgeschwenkten eingefalteten Position der Fondsitzlehne 13 die Werkstoffbahn 18 gegen ein unerwünschtes Abrollen in Richtung y blockiert.

Ein Zurückschwenken aus der beschriebenen Sperrlage der Fondsitzlehne 13 zurück in die Position gemäß Fig. 3 erfordert zunächst wieder eine Bewegung des Sperrhebels 30 entgegen der Fahrtrichtung x. Dabei befindet sich die Sperrklinke S in ihrer Lösestellung, und die Werkstoffbahn 18 wird in Richtung z entsprechend dem Drehsinn v der Wickelwelle 17 aufgewickelt. Sobald der Sperrhebel 30 wieder in Fahrtrichtung x in seine Sperrstellung versetzt wird, um die Fondsitzlehne 13 zu fixieren, kann sich die durch die Feder 29 rückstellbelastete Sperrklinke S unter der Wirkung des Bewegungsverzögerers 22 zeitverzögert in Richtung b in ihre Sperrposition zurückbewegen.

## Patentansprüche (Patentansprüche für folgende(n) Vertragsstaat(en): DE, FR, GB, SE)

1. Laderaum-Trennvorrichtung (10) für Kraftwagen, insbesondere für Kombinations-Personenkraftwagen, mit einer entgegen dem Drehmoment eines Motors von einer Wickelwelle (17), die fahrzeugseitig in einer Halterung (11, 11) aufgenommen ist, abrollbaren, mit ihrem abgerollten freien Endbereich fahrzeugseitig lösbar festzulegenden Werkstoffbahn (18), wobei mit der Wickelwelle (17) mindestens eine Rastscheibe (R) drehfest ist, mit der eine in der Halterung (11, 11) gelagerte Sperrklinke (S) kooperiert, welche von einer Rückstellkraft (F) in ihrer Sperrstellung gehalten ist und dabei die Wickelwelle (17) gegen ein Abrollen der Werkstoffbahn (18) blockiert, und welche mittels eines Betätigungsgliedes (23, 24) in ihre Sperr- oder Lösestellung versetzbar ist, wobei die Sperrklinke (S) ein starres Bauteil darstellt, welches mit einer Lageraufnahme (39) auf einem mit der Halterung (11, 11) raumfesten Schwenkachselement (21) schwenkgelagert ist, daß die Rückstellkraft von einer die Sperrklinke (S) beaufschlagenden besonderen Rückstelleinheit (29) gebildet ist, daß das Betätigungsglied (23, 24) eine mit der Sperrklinke (S) bewegungsgekuppelte separate Einheit bildet, und daß auf die in ihrer Lösestellung befindliche, in Richtung (b) ihrer Sperrstellung von der Rückstelleinheit (29) belastete Sperrklinke (S) oder auf das Betätigungsglied (23, 24) ein die Rückstellbewegung (Richtung b) der Sperrklinke (S) in die Sperrstellung hinein beeinflussender Bewegungsverzögerer (22) einwirkt.

2. Laderaum-Trennvorrichtung (10) für Kraftwagen, insbesondere für Kombinations-Personenkraftwagen, mit einer entgegen dem Drehmoment eines Motors von einer Wickelwelle (17), die fahrzeugseitig in einer Halterung (11, 11) aufgenommen ist, abrollbaren, mit ihrem abgerollten freien Endbereich fahrzeugseitig lösbar festzulegenden Werkstoffbahn (18), wobei mit der Wickelwelle (17) mindestens eine Rastscheibe (R) drehfest ist, mit der eine in der Halterung (11, 11) gelagerte Sperrklinke (S) kooperiert, welche von einer Rückstellkraft (F) in ihrer Sperrstellung gehalten ist und dabei die Wickelwelle (17) gegen ein Abrollen der Werkstoffbahn (18) blockiert, und welche mittels eines Betätigungsgliedes (23, 24) in ihre Sperr- oder Lösestellung versetzbar ist, wobei die Sperrklinke (S) ein starres Bauteil darstellt, welches mit einer Lageraufnahme (39) auf einem mit der Halterung (11, 11) raumfesten Schwenkachselement (21) schwenkgelagert ist, daß die Rückstellkraft von einer die Sperrklinke (S) beaufschlagenden besonderen Rückstelleinheit (29) gebildet ist, daß das Betätigungsglied (23, 24) eine mit der Sperrklinke (S) bewegungsgekuppelte separate Einheit bildet, daß die Sperrklinke (S) mittels eines gesonderten Bedienungsteils (29, 30) betätigbar ist, und daß das Bedienungsteil ein zusätzliche Aufgaben erfüllendes Funktionselement (25, 30) ist.

3. Laderaumtrennvorrichtung nach Anspruch 1, **dadurch gekennzeichnet, daß** die Sperrklinke (S) mittels eines gesonderten Bedienungsteils (29, 30) betätigbar ist,

4. Laderaum-Trennvorrichtung nach Anspruch 3, **dadurch gekennzeichnet, daß** das Bedienungsteil ein zusätzliche Aufgaben erfüllendes Funktionselement (25, 30) ist.

5. Laderaum-Trennvorrichtung nach einem der Ansprüche 1 bis 4, **dadurch gekennzeichnet, daß** das Bedienungsteil (25) an einem die Wickelwelle (17) umgebenden Rollogehäuse (31) angeordnet ist.

6. Laderaum-Trennvorrichtung nach einem der Ansprüche 1 bis 5, **dadurch gekennzeichnet, daß** das Bedienungsteil (30) von einem die Wickelwelle (17) umgebenden Rollogehäuse (31) distanziert angeordnet ist.

7. Laderaum-Trennvorrichtung nach einem der Ansprüche 2 bis 6, **dadurch gekennzeichnet, daß** auf die in ihrer Lösestellung befindliche, in Richtung (b) ihrer Sperrstellung von der Rückstelleinheit (29) belastete Sperrklinke (S) oder auf das Betätigungsglied (23, 24) ein die Rückstellbewegung (Richtung b) der Sperrklinke (S) in die Sperrstellung hinein beeinflussender Bewegungsverzögerer (22) einwirkt.

8. Laderaum-Trennvorrichtung nach einem der Ansprüche 1 bis 7, **dadurch gekennzeichnet, daß** das Betätigungsglied (23, 24) die Sperrklinke (S) mit einem nur eine druckfeste Bewegungskupplung gestattenden Druckanschlag (D1, D2) in Löserichtung (a) untergreift.

9. Laderaum-Trennvorrichtung nach einem der Ansprüche 1 bis 8, **dadurch gekennzeichnet, daß** der Druckanschlag (D1) Bestandteil einer ein Betätigungsglied bildenden Kurvenscheibe (23) ist.

10. Laderaum-Trennvorrichtung nach Anspruch 9, **dadurch gekennzeichnet, daß** die Kurvenscheibe (23) mit einer das Funktionselement bildenden torartigen Klappe (25) des Rollogehäuses (31) bewegungseinheitlich ist.

11. Laderaum-Trennvorrichtung nach einem der Ansprüche 1 bis 10, **dadurch gekennzeichnet, daß** bei einer an einer klappbaren Sitzlehne (13) rückseitig befestigten Wickelwelle (17) ein Sperrhebel (30) einer Sitzlehnensperre (38) das Funktionselement bildet, welches mit dem Betätigungsglied (24) für die Sperrklinke (S) im gleichen Betätigungssinn bewegungsverbunden ist.

## Patentansprüche (Patentansprüche für folgende(n) Vertragsstaat(en): IT, ES)

1. Laderaum-Trennvorrichtung (10) für Kraftwagen, insbesondere für Kombinations-Personenkraftwagen, mit einer entgegen dem Drehmoment eines Motors von einer Wickelwelle (17), die fahrzeugseitig in einer Halterung (11, 11) aufgenommen ist, abrollbaren, mit ihrem abgerollten freien Endbereich fahrzeugseitig lösbar festzulegenden Werkstoffbahn (18), wobei mit der Wickelwelle (17) mindestens eine Rastscheibe (R) drehfest ist, mit der eine in der Halterung (11, 11) gelagerte Sperrklinke (S) kooperiert, welche von einer Rückstellkraft (F) in ihrer Sperrstellung gehalten ist und dabei die Wickelwelle (17) gegen ein Abrollen der Werkstoffbahn (18) blockiert, und welche mittels eines Betätigungsgliedes (23, 24) in ihre Sperr- oder Lösestellung versetzbar ist, **dadurch gekennzeichnet, daß** die Sperrklinke (S) ein starres Bauteil darstellt, welches mit einer Lageraufnahme (39) auf einem mit der Halterung (11, 11) raumfesten Schwenkachselement (21) schwenkgelagert ist, daß die Rückstellkraft von einer die Sperrklinke (S) beaufschlagenden besonderen Rückstelleinheit (29) gebildet ist, und daß das Betätigungsglied (23, 24) eine mit der Sperrklinke (S) bewegungsgekuppelte separate Einheit bildet.

2. Laderaum-Trennvorrichtung nach Anspruch 1, **dadurch gekennzeichnet, daß** die Sperrklinke (S) mittels eines gesonderten Bedienungsteils (29, 30) betätigbar ist.

3. Laderaum-Trennvorrichtung nach Anspruch 2, **dadurch gekennzeichnet, daß** das Bedienungsteil ein zusätzliche Aufgaben erfüllendes Funktionselement (25, 30) ist.

4. Laderaum-Trennvorrichtung nach Anspruch 2 oder nach Anspruch 3, **dadurch gekennzeichnet, daß** das Bedienungsteil (25) an einem die Wickelwelle (17) umgebenden Rollogehäuse (31) angeordnet ist.

5. Laderaum-Trennvorrichtung nach einem der Ansprüche 1 bis 3, **dadurch gekennzeichnet, daß** das Bedienungsteil (30) von einem die Wickelwelle (17) umgebenden Rollogehäuse (31) distanziert angeordnet ist.

6. Laderaum-Trennvorrichtung nach einem der Ansprüche 1 bis 5, **dadurch gekennzeichnet, daß** auf die in ihrer Lösestellung befindliche, in Richtung (b) ihrer Sperrstellung von der Rückstelleinheit (29) belastete Sperrklinke (S) oder auf das Betätigungsglied (23, 24) ein die Rückstellbewegung (Richtung b) der Sperrklinke (S) in die Sperrstellung hinein beeinflussender Bewegungsverzögerer (22) einwirkt.

7. Laderaum-Trennvorrichtung nach einem der Ansprüche 1 bis 6, **dadurch gekennzeichnet, daß** das Betätigungsglied (23, 24) die Sperrklinke (S) mit einem nur eine druckfeste Bewegungskupplung gestattenden Druckanschlag (D1, D2) in Löserichtung (a) untergreift.

8. Laderaum-Trennvorrichtung nach einem der Ansprüche 1 bis 7, **dadurch gekennzeichnet, daß** der Druckanschlag (D1) Bestandteil einer ein Betätigungsglied bildenden Kurvenscheibe (23) ist.

9. Laderaum-Trennvorrichtung nach Anspruch 8, **dadurch gekennzeichnet, daß** die Kurvenscheibe (23) mit einer das Funktionselement bildenden torartigen Klappe (25) des Rollogehäuses (31) bewegungseinheitlich ist.

10. Laderaum-Trennvorrichtung nach einem der Ansprüche 1 bis 9, **dadurch gekennzeichnet, daß** bei einer an einer klappbaren Sitzlehne (13) rückseitig befestigten Wickelwelle (17) ein Sperrhebel (30) einer Sitzlehnensperre (38) das Funktionselement bildet, welches mit dem Betätigungsglied (24) für die Sperrklinke (S) im gleichen Betätigungssinn bewegungsverbunden ist.

## Claims (Claims for the following Contracting State(s): DE, FR, GB, SE)

1. Load compartment partitioning apparatus (10) for motor vehicles, in particular for estate cars, comprising a material web (18), which is unrollable counter to the torque of a motor from a winding shaft (17) accommodated in a vehicle-side mounting (11, 11) and is to be detachably fastened by its unrolled free end region to the vehicle, wherein there is rotationally fixed to the winding shaft (17) at least one detent disk (R), cooperating with which is a detent pawl (S), which is supported in the mounting (11, 11) and held in its blocking position by a restoring force (F) and in said case locks the winding shaft (17) against an unrolling of the material web (18), and which is transferrable into its blocking or release position by means of an actuating element (23, 24), wherein the detent pawl (S) is a rigid component, which is pivotally mounted by a bearing receiver (39) on a swivelling axis element (21) spatially fixed to the mounting (11, 11), that the restoring force is formed by a special restoring unit (29), which acts upon the detent pawl (S), that the actuating element (23, 24) forms a separate unit motionally coupled to the detent pawl (S), and that acting upon the detent pawl (S) situated in its release position and loaded in the direction (b) of its blocking position by the restoring unit (29) or upon the actuating element (23, 24) is a movement retarder (22), which influences the restoring movement (direction b) of the detent pawl (S) into the blocking position.

2. Load compartment partitioning apparatus (10) for motor vehicles, in particular for estate cars, comprising a material web (18), which is unrollable counter to the torque of a motor from a winding shaft (17) accommodated in a vehicle-side mounting (11, 11) and is to be detachably fastened by its unrolled free end region to the vehicle, wherein there is rotationally fixed to the winding shaft (17) at least one detent disk (R), cooperating with which is a detent pawl (S), which is supported in the mounting (11, 11) and held in its blocking position by a restoring force (F) and in said case locks the winding shaft (17) against an unrolling of the material web (18), and which is transferrable into its blocking or release position by means of an actuating element (23, 24), wherein the detent pawl (S) is a rigid component, which is pivotally mounted by a bearing receiver (39) on a swivelling axis element (21) spatially fixed to the mounting (11, 11), that the restoring force is formed by a special restoring unit (29), which acts upon the detent pawl (S), that the actuating element (23, 24) forms a separate unit motionally coupled to the detent pawl (S), that the detent pawl (S) is actuable by means of a separate operating part (29, 30), and that the operating part is a function element (25, 30), which performs additional tasks.

3. Load compartment partitioning apparatus according to claim 1, **characterized in that** the detent pawl (S) is actuable by means of a separate operating part (29, 30).

4. Load compartment partitioning apparatus according to claim 3, **characterized in that** the operating part is a function element (25, 30), which performs additional tasks.

5. Load compartment partitioning apparatus according to one of claims 1 to 4, **characterized in that** the operating part (25) is disposed on a roller blind housing (31) surrounding the winding shaft (17).

6. Load compartment partitioning apparatus according to one of claims 1 to 5, **characterized in that** the operating part (30) is disposed at a distance from a roller blind housing (31) surrounding the winding shaft (17).

7. Load compartment partitioning apparatus according to one of claims 2 to 6, **characterized in that** acting upon the detent pawl (S) situated in its release position and loaded in the direction (b) of its blocking position by the restoring unit (29) or upon the actuating element (23, 24) is a movement retarder (22), which influences the restoring movement (direction b) of the detent pawl (S) into the blocking position.

8. Load compartment partitioning apparatus according to one of claims 1 to 7, **characterized in that** the actuating element (23, 24) engages in release direction (a) under the detent pawl (S) with a pressure stop (D1, D2), which allows only a pressure-resistant motional coupling.

9. Load compartment partitioning apparatus according to one of claims 1 to 8, **characterized in that** the pressure stop (D1) is a component part of a cam disk (23) forming an actuating element.

10. Load compartment partitioning apparatus according to claim 9, **characterized in that** the cam disk (23) is motionally uniform with a gate-like flap (25) of the roller blind housing (31), which flap forms the function element.

11. Load compartment partitioning apparatus according to one of claims 1 to 10, **characterized in that**, given a winding shaft (17) fastened to the rear of a foldable seat back (13), a blocking lever (30) of a seat back lock (38) forms the function element, which is motionally coupled in the same actuating direction to the actuating element (24) for the detent pawl (S).

## Claims (Claims for the following Contracting State(s): IT, ES)

1. Load compartment partitioning apparatus (10) for motor vehicles, in particular for estate cars, comprising a material web (18), which is unrollable counter to the torque of a motor from a winding shaft (17) accommodated in a vehicle-side mounting (11, 11) and is to be detachably fastened by its unrolled free end region to the vehicle, wherein there is rotationally fixed to the winding shaft (17) at least one detent disk (R), cooperating with which is a detent pawl (S), which is supported in the mounting (11, 11) and held in its blocking position by a restoring force (F) and in said case locks the winding shaft (17) against an unrolling of the material web (18), and which is transferrable into its blocking or release position by means of an actuating element (23, 24), **characterized in that** the detent pawl (S) is a rigid component, which is pivotally mounted by a bearing receiver (39) on a swivelling axis element (21) spatially fixed to the mounting (11, 11), that the restoring force is formed by a special restoring unit (29), which acts upon the detent pawl (S), and that the actuating element (23, 24) forms a separate unit motionally coupled to the detent pawl (S).

2. Load compartment partitioning apparatus according to claim 1, **characterized in that** the detent pawl (S) is actuable by means of a separate operating part (29, 30).

3. Load compartment partitioning apparatus according to claim 2, **characterized in that** the operating part is a function element (25, 30), which performs additional tasks.

4. Load compartment partitioning apparatus according to claim 2 or according to claim 3, **characterized in that** the operating part (25) is disposed on a roller blind housing (31) surrounding the winding shaft (17).

5. Load compartment partitioning apparatus according to one of claims 1 to 3, **characterized in that** the operating part (30) is disposed at a distance from a roller blind housing (31) surrounding the winding shaft (17).

6. Load compartment partitioning apparatus according to one of claims 1 to 5, **characterized in that** acting upon the detent pawl (S) situated in its release position and loaded in the direction (b) of its blocking position by the restoring unit (29) or upon the actuating element (23, 24) is a movement retarder (22), which influences the restoring movement (direction b) of the detent pawl (S) into the blocking position.

7. Load compartment partitioning apparatus according to one of claims 1 to 6, **characterized in that** the actuating element (23, 24) engages in release direction (a) under the detent pawl (S) with a pressure stop (D1, D2), which allows only a pressure-resistant motional coupling.

8. Load compartment partitioning apparatus according to one of claims 1 to 7, **characterized in that** the pressure stop (D1) is a component part of a cam disk (23) forming an actuating element.

9. Load compartment partitioning apparatus according to claim 8, **characterized in that** the cam disk (23) is motionally uniform with a gate-like flap (25) of the roller blind housing (31), which flap forms the function element.

10. Load compartment partitioning apparatus according to one of claims 1 to 9, **characterized in that**, given a winding shaft (31) fastened to the rear of a foldable seat back (13), a blocking lever (30) of a seat back lock (38) forms the function element, which is motionally coupled in the same actuating direction to the actuating element (24) for the detent pawl (S).

## Revendications (Revendications pour l'(les) Etat(s) contractant(s) suivant(s): DE, FR, GB, SE)

1. Dispositif de séparation de compartiment de chargement (10) pour des véhicules automobiles, en particulier pour des véhicules de type commerciaux, avec une bande de matériau (18), susceptible d'être déroulée, à l'encontre du couple produit par un moteur, depuis un arbre d'enroulement (17) logé côté véhicule dans une fixation (11, 11), la bande de matériau étant susceptible d'être fixée de façon désolidarisable coté véhicule par sa zone d'extrémité libre déroulée, sachant qu'est assujetti à rotation à l'arbre d'enroulement (17) au moins un disque à cliquet (R), avec lequel coopère un cliquet de blocage (S), monté dans la fixation (11, 11) et maintenu à sa position de blocage, par un ressort de rappel (F) et bloquant alors l'arbre d'enroulement (17) contre tout déroulement de la bande de matériau (18), et le cliquet de blocage (S) peut être passé à sa position de blocage ou de désolidarisation, au moyen d'un organe d'actionnement (23, 24), sachant que le cliquet de blocage (S) constitue un composant rigide, monté à pivotement, à l'aide d'un logement de palier (39), sur un élément d'axe de pivotement (21) fixé spatialement à la fixation (11, 11), en ce que la force de rappel est produite par une unité de rappel (29) particulière, sollicitant le cliquet de blocage (S), en ce que l'organe d'actionnement (23, 24) forme une unité séparée, couplée cinématiquement au cliquet de blocage (S), et en ce que, sur le cliquet de blocage (S) se trouvant à sa position de désolidarisation, cliquet chargé par l'unité de rappel (29) dans la direction (b) de sa position de blocage, ou bien sur l'organe d'actionnement (23, 24), agit un retardateur de mouvement (22), influant sur le mouvement de rappel (direction b) du cliquet de blocage (S) lors de son passage à sa position de blocage.

2. Dispositif de séparation de compartiment de chargement (10) pour des véhicules automobiles, en particulier pour des véhicules de type commerciaux, avec une bande de matériau (18), susceptible d'être déroulée, à l'encontre du couple produit par un moteur, depuis un arbre d'enroulement (17) logé côté véhicule dans une fixation (11, 11), la bande de matériau étant susceptible d'être fixée de façon désolidarisable coté véhicule par sa zone d'extrémité libre déroulée, sachant qu'est assujetti à rotation à l'arbre d'enroulement (17) au moins un disque à cliquet (R), avec lequel coopère un cliquet de blocage (S), monté dans la fixation (11, 11) et maintenu à sa position de blocage, par un ressort de rappel (F) et bloquant alors l'arbre d'enroulement (17) contre tout déroulement de la bande de matériau (18), et le cliquet de blocage (S) peut être passé à sa position de blocage ou de désolidarisation, au moyen d'un organe d'actionnement (23, 24), sachant que le cliquet de blocage (S) constitue un composant rigide, monté à pivotement, à l'aide d'un logement de palier (39), sur un élément d'axe de pivotement (21) fixé spatialement à la fixation (11, 11), en ce que la force de rappel est produite par une unité de rappel (29) particulière, sollicitant le cliquet de blocage (S), en ce que l'organe d'actionnement (23, 24) forme une unité séparée, couplée cinématiquement au cliquet de blocage (S), en ce que sur le cliquet de blocage (S) est actionnable à l'aide d'une pièce de manoeuvre (29, 30) séparée, et en ce que la pièce de manoeuvre est un élément fonctionnel (25, 30) remplissant des tâches supplémentaires.

3. Dispositif de séparation de compartiment de chargement selon la revendication 1, **caractérisé en ce que** le cliquet de blocage (S) est actionnable, à l'aide d'une pièce de manoeuvre (29, 30) séparée.

4. Dispositif de séparation de compartiment de chargement selon la revendication 3, **caractérisé en ce que** la pièce de manoeuvre est un élément fonctionnel (25, 30) satisfaisant à des taches supplémentaires.

5. Dispositif de séparation de compartiment de chargement selon l'une des revendications 1 à 4, **caractérisé en ce que** la pièce de manoeuvre (25) est disposée sur un boîtier de rideau déroulant (31) entourant l'arbre d'enroulement (17).

6. Dispositif de séparation de compartiment de chargement selon l'une des revendications 1 à 5, **caractérisé en ce que** la pièce de manoeuvre (30) est disposée à distance d'un boîtier de rideau déroulant (31) entourant l'arbre d'enroulement (17).

7. Dispositif de séparation de compartiment de chargement selon l'une des revendications 2 à 6, **caractérisé en ce que**, sur le cliquet de blocage (S) se trouvant à sa position de désolidarisation, chargé par l'unité de rappel (29) dans la direction (b) de sa position de blocage, ou bien sur l'organe d'actionnement (23, 24), agit un retardateur de mouvement (22), influant sur le mouvement de rappel (direction b) du cliquet de blocage (S) à la position bloquée.

8. Dispositif de séparation de compartiment de chargement selon l'une des revendications 1 à 7, **caractérisé en ce que** l'organe d'actionnement (23, 24) saisit par le dessous le cliquet de blocage (S) dans la direction de désolidarisation (a) avec une butée de pressage (D1, D2), permettant d'avoir un couplage cinématique résistant à la pression.

9. Dispositif de séparation de compartiment de chargement selon l'une des revendications 1 à 8, **caractérisé en ce que** la butée de pressage (D1) fait partie d'un disque à cames (23) formant un organe d'actionnement.

10. Dispositif de séparation de compartiment de chargement selon la revendication 9, **caractérisé en ce que** le disque à cames (23) est cinématiquement unitaire envers un clapet ou volet (25) du type d'une porte, formant l'élément fonctionnel, du boîtier de rideau déroulant (31).

11. Dispositif de séparation de compartiment de chargement selon l'une des revendications 1 à 10, **caractérisé en ce que** dans le cas d'un arbre d'enroulement (17) fixé du côté arrière sur un dossier de siège (13) rabattable, un levier de blocage (30) d'un verrou de dossier de siège (38) forme l'élément fonctionnel, lié cinématiquement dans le même sens d'actionnement à l'organe d'actionnement (24), pour le cliquet de blocage (S).

## Revendications (Revendications pour l'(les) Etat(s) contractant(s) suivant(s): It, ES)

1. Dispositif de séparation de compartiment de chargement (10) pour des véhicules automobiles, en particulier pour des véhicules de type commerciaux, avec une bande de matériau (18), susceptible d'être déroulée, à l'encontre du couple produit par un moteur, depuis un arbre d'enroulement (17) logé côté véhicule dans une fixation (11, 11), la bande de matériau étant susceptible d'être fixée de façon désolidarisable coté véhicule par sa zone d'extrémité libre déroulée, sachant qu'est assujetti à rotation à l'arbre d'enroulement (17) au moins un disque à cliquet (R), avec lequel coopère un cliquet de blocage (S), monté dans la fixation (11, 11) et maintenu à sa position de blocage, par un ressort de rappel (F) et bloquant alors l'arbre d'enroulement (17) contre tout déroulement de la bande de matériau (18), et le cliquet de blocage (S) peut être passé à sa position de blocage ou de désolidarisation, au moyen d'un organe d'actionnement (23, 24), **caractérisé en ce que** que le cliquet de blocage (S) constitue un composant rigide, monté à pivotement, à l'aide d'un logement de palier (39), sur un élément d'axe de pivotement (21) fixé spatialement à la fixation (11, 11), **en ce que** la force de rappel est produite par une unité de rappel (29) particulière, sollicitant le cliquet de blocage (S), **en ce que** l'organe d'actionnement (23, 24) forme une unité séparée, couplée cinématiquement au cliquet de blocage (S).

2. Dispositif de séparation de compartiment de chargement selon la revendication 1, **caractérisé en ce que** le cliquet de blocage (S) est actionnable, à l'aide d'une pièce de manoeuvre (29, 30) séparée.

3. Dispositif de séparation de compartiment de chargement selon la revendication 3, **caractérisé en ce que** la pièce de manoeuvre est un élément fonctionnel (25, 30) satisfaisant à des taches supplémentaires.

4. Dispositif de séparation de compartiment de chargement selon la revendications 3, **caractérisé en ce que** la pièce de manoeuvre (25) est disposée sur un boîtier de rideau déroulant (31) entourant l'arbre d'enroulement (17).

5. Dispositif de séparation de compartiment de chargement selon l'une des revendications 1 à 3, **caractérisé en ce que** la pièce de manoeuvre (30) est disposée à distance d'un boîtier de rideau déroulant (31) entourant l'arbre d'enroulement (17).

6. Dispositif de séparation de compartiment de chargement selon l'une des revendications 1 à 5, **caractérisé en ce que**, sur le cliquet de blocage (S) se trouvant à sa position de désolidarisation, chargé par l'unité de rappel (29) dans la direction (b) de sa position de blocage, ou bien sur l'organe d'actionnement (23, 24), agit un retardateur de mouvement (22), influant sur le mouvement de rappel (direction b) du cliquet de blocage (S) à la position bloquée.

7. Dispositif de séparation de compartiment de chargement selon l'une des revendications 1 à 6, **caractérisé en ce que** l'organe d'actionnement (23, 24) saisit par le dessous le cliquet de blocage (S) dans la direction de désolidarisation (a) avec une butée de pressage (D1, D2), permettant d'avoir un couplage cinématique résistant à la pression.

8. Dispositif de séparation de compartiment de chargement selon l'une des revendications 1 à 7, **caractérisé en ce que** la butée de pressage (D1) fait partie d'un disque à cames (23) formant un organe d'actionnement.

9. Dispositif de séparation de compartiment de chargement selon la revendication 9, **caractérisé en ce que** le disque à cames (23) est cinématiquement unitaire envers un clapet ou volet (25) du type d'une porte, formant l'élément fonctionnel, du boîtier de rideau déroulant (31).

10. Dispositif de séparation de compartiment de chargement selon l'une des revendications 1 à 9, **caractérisé en ce que** dans le cas d'un arbre d'enroulement (17) fixé du côté arrière sur un dossier de siège (13) rabattable, un levier de blocage (30) d'un verrou de dossier de siège (38) forme l'élément fonctionnel, lié cinématiquement dans le même sens d'actionnement à l'organe d'actionnement (24), pour le cliquet de blocage (S).
